(19) Europäisches Patentamt
European Patent Office
Office européen des brevets

(11) Publication number: 0 062 508 B1

(12) EUROPEAN PATENT SPECIFICATION

(45) Date of publication of patent specification: 16.07.86

(51) Int. Cl.4: B 23 Q 3/154

(21) Application number: 82301747.0

(22) Date of filing: 02.04.82

# (54) A magnetic retainer assembly.

(30) Priority: 02.04.81 JP 47735/81
02.04.81 JP 47736/81
20.04.81 JP 57785/81
20.04.81 JP 57786/81
15.05.81 JP 70928/81
28.05.81 JP 78911/81
23.07.81 JP 109965/81
23.07.81 JP 109966/81
23.07.81 JP 109967/81

(43) Date of publication of application:
13.10.82 Bulletin 82/41

(45) Publication of the grant of the patent:
16.07.86 Bulletin 86/29

(84) Designated Contracting States:
DE FR GB IT

(56) References cited:
DE-B-1 179 653
DE-B-1 226 397
FR-A-1 029 480
FR-A-1 426 389
GB-A- 450 541
GB-A- 768 033
GB-A- 844 999
US-A-1 595 692
US-A-1 754 587
US-A-2 286 238

(73) Proprietor: INOUE-JAPAX RESEARCH INCORPORATED
5289 Aza Michimasa Nagatsudamachi Midoriku
Yokohamashi Kanagawaken (JP)

(72) Inventor: Inoue, Kiyoshi
3-16-8 Kamiyoga Setagayaku
Tokyo (JP)

(74) Representative: Saunders, Harry
SAUNDERS & DOLLEYMORE
European Patent Attorneys
2 Norfolk Road
Rickmansworth Hertfordshire WD3 1JH (GB)

(56) References cited:
US-A-2 690 527
US-A-2 787 874
US-A-2 972 485
US-A-3 258 658
US-A-3 581 873
US-A-3 665 355

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 062 508 B1

**Description**

The present invention relates generally to magnetic retainers and, in particular, to a new and improved magnetic retainer assembly adapted for selective attachment to and detachment from an object of magnetic material (hereinafter: magnetic or magnetizable object), such as a workpiece or a portion of a machine tool. Magnetic retainers according to the invention may be used, for example, as a magnetic base adapted to be magnetically secured to an object for supporting a measuring instrument such as a dial gauge with a post or arm member provided thereon, or as a magnetic chuck or grip for holding against gravitational drop an unsupported portion of a workpiece being progressively severed by cutting. The invention further provides a deformable magnetic retainer assembly which can withstand a high degree of deformation and can readily be applied to a magnetizable object or objects to hold it or retain them together.

In a conventional magnetic retainer, e.g. a magnetic base, adapted to be magnetically secured on a magnetizable object, a limited size of its base member has considerably restricted the magnetic attraction attainable between a permanent magnet accommodated therein and the object. The use of a larger base member in an attempt to increase the magnetic attraction renders the whole assembly undesirably heavy and bulky, making it inadequate or inconvenient for easy handling by the operator. In addition, the conventional magnetic base, which is formed as a block, is relatively unstable when placed on an object for supporting a post or arm member to which a relatively large or heavy measuring instrument is mounted. Furthermore, a considerable reduction in the attractive capability of the permanent magnet has been encountered with the prior-art magnetic retainer assembly while in use in which attachment and detachment are repeated.

It should also be noted that needs exist for deformable magnetic retainers which can readily be applied to, for example, a corrugated surface of a magnetizable object to magnetically retain it, or an angular junction of two or more magnetizable parts to magnetically hold them together, or to nip a magnetizable article on its two opposed surfaces whereby to magnetically grip it. Conventional deformable magnetic retainers employ a deformable material in which particles of a permanent magnet material are uniformly distributed. These retainers have, however, been of limited utility because of their inability to undergo a high degree of deformation. When subjected to such deformation, they tend to develop cracks therein. Furthermore, the known deformable magnetic retainers are either relatively short in service life or poor in magnetic attraction capability.

It is, accordingly, a principal object of the present invention to provide a new, improved and useful magnetic retainer assembly which is much more efficient and superior in operating performance than existing magnetic retainer assemblies.

Another important object of the present invention is to provide a magnetic retainer assembly which is less susceptible to demagnetization (i.e. a reduction in magnetic attraction capability), and has thus a greater in-service life than prior magnetic retainer assemblies.

Yet another object of the invention is to provide a magnetic retainer assembly which, in comparison with conventional magnetic retainer assemblies of the deformable type, is deformable to a much greater extent without suffering damage, has a greater in-service life, and yet is much greater in magnetic attraction capability.

In one prior proposal (Patent Specification GB—A—844,999), there is disclosed a releasable magnetic retainer assembly or chuck in which a movable array of transversely spaced, parallel, upright permanent bar magnets is disposed beneath, cooperates closely with, and is movable transversely relative to a stationary bed on which an object to be gripped may be placed. Each such magnet is provided at its respective sides with soft iron flux return path members, which are magnetically isolated transversely from the adjacent magnet by interposed, non-magnetic aluminium separator strips. The array so formed is mechanically clamped by nut and bolt clamping means.

The stationary bed incorporates an array of transversely-spaced, parallel, upright, soft iron flux-path forming members which are spaced apart by non-magnetic aluminium separator strips, having a pitch corresponding to that of the non-magnetic strips in the movable array. This array is likewise mechanically clamped by nut and bolt clamping means.

The movable array is displaceable between first and second positions. In the first position, in which the non-magnetic separator strips of the bed are aligned with the corresponding separator strips in the movable array, the magnetic fluxes of the respective magnets link, via the soft iron flux-path forming members of the bed, with a magnetizable object placed on the bed, and so magnetically retain it in position on the bed. In the second position, each such flux-path forming member of the stationary bed straddles an adjacent non-magnetic separator strip in the movable array, so that the flux of each magnet is provided with a return path of low magnetic reluctance by those flux-path forming members of the bed, and so that little if any magnetic flux links with the object carried on the bed. Thus, that object is magnetically released, and so can be removed.

This magnetic chuck thus incorporates a means of diverting the magnetic fluxes from the object disposed on the bed, without materially changing the magnitude of the fluxes. As a result, the movable array and the bed are subjected to the same high magnetically-produced forces of attraction no matter what the relative positions of the bed and the movable array. Thus, difficulty can be experienced in moving the movable array between the two positions, and the opposed surfaces of the bed and the movable array may be subjected to considerable wear, unless specially protected against it.

Moreover, since each magnet has a large transverse cross section, the flux density will not be uniform at all positions thereon, so that the attractive force holding an object on the bed will vary from position to position across the width of the bed. Moreover, smaller objects that bridge fewer, or smaller areas, of the magnets will be less well retained thereon than larger objects.

Furthermore, the construction shown is not suited to use in a flexible or deformable body for gripping or retaining non-planar surfaces of objects.

In a further prior document (Patent Specification US—A—2,286,235), an unidentified prior proposal to use in a magnetic flux diverting arrangement for a magnetic chuck an assembly of narrow horseshoe magnets was dismissed because of the practical manufacturing and operational difficulties referred to. To avoid those difficulties, the use of massive permanent bar magnets having transversely space polar pieces was proposed for magnetizing a set of magnetically-isolated pole pieces of a bed of the chuck, whereby to magnetically link an object placed on the bed and so retain it. To release the object, the massive bar magnets and their polar pieces were to be displaced transversely relative to the pole pieces of the bed, so as to break the magnetic flux paths and so magnetically isolate the magnet polar pieces from the object on the bed. The massive bar magnets were thus intended to carry a high magnetic flux to retain the object to be gripped, and to carry substantially no magnetic flux when the object was to be released.

It is well known that permanent bar magnets tend to become progressively de-magnetized by repeated reductions of their magnetic fluxes from high to very low values.

According to the present invention, a magnetic retainer assembly for selectively securing thereto and detaching therefrom a magnetizable object comprises:

a plurality of permanent, columnar or disc-shaped magnets of a like shape and size, each of which is axially magnetized and has two opposed magnetic poles at its two opposite end faces, and which magnets are arranged respectively at predetermined positions regularly spaced apart and constitute a predetermined set in the assembly so as to individually produce magnetic fluxes of a uniform strength;

support means having each of said permanent magnets individually at least laterally embedded therein for holding said magnets at said spaced-apart positions in an essentially magnetically insulating relationship with each other;

first magnetic-path forming means associated with said support means for magnetically completing said opposed poles of each of said permanent magnets individually with said magnetizable object through a first magnetic circuit of a sufficiently low magnetic reluctance to cause said assembly to be attached to said object or vice versa; and

second magnetic-path forming means associated with said support means for establishing, for each of said permanent magnets and parallel to said first magnetic circuit, a second a magnetic circuit of a relatively high magnetic reluctance for shunting said first magnetic circuit when said object is to be, or remains, detached from said assembly, which second magnetic-path forming means incorporates semi-magnetic material, and which high magnetic reluctance is such as to facilitate detachment of a said object from said assembly but prevent any substantial demagnetization of the associated magnet with successive detachments of such objects from said assembly.

In such an assembly, the array of regularly spaced permanent bar magnets individually embedded at least laterally in the support means produces a pattern of individual, regularly-spaced, localized magnetic fluxes of uniform strength, which fluxes are distributed around the object contacting surface of the assembly in a desirable, regular pattern which is suited to the uniform retention of both small and large objects alike.

Moreover, the provision of the said "second magnetic-path forming means" ensures that the magnetic flux is so controlled in magnitude that the problem of progressive de-magnetization of the magnets is avoided.

Furthermore, a magnetic retainer assembly according to the present invention can be constructed and used in a wide variety of different practical formats and contexts (as will appear from the description that follows hereafter).

In addition, magnetic retainer assemblies according to the present invention are capable of retaining satisfactorily a much greater range of sizes of objects to be gripped than the prior arrangements, since such assemblies embody a regularly spaced series of small magnets, whose spacing can be suited to the smallest object to be retained. Such assemblies will retain equally well objects of much greater sizes.

Preferably, each of the permanent magnets is rectangular, cylindrical or disk-shaped with two opposed parallel end surfaces having an equal area and forming N- and S-pole surfaces. Each permanent magnet should preferably be constituted by a unitary body of a rare earth-cobalt permanent magnet material although any other permanent magnet material may also be used.

The support means may be constituted by a base member in the form of a circular disk, or a square or rectangular plate composed of a non-magnetic or para-magnetic material in which permanent magnets are embedded at positions equidistantly spaced apart about a centre thereof. Alternatively, the base member may be composed of a semi-magnetic material constituted by a mixture of magnetic particles and a non-magnetic material such as synthetic resin.

Various preferred features of the present invention will become apparent from the claims appended at the end of the description that follows hereafter, and such features (and the advantages arising therefrom), and various preferred embodiments of the present invention, will also be revealed by a reading of that description taken with reference to the accompanying diagrammatic drawings, in which:

FIG. 1 is a plan view diagrammatically illustrating a magnetic retainer assembly according to the invention;

FIG. 2 is a section taken along line II—II in FIG. 1, the assembly being shown magnetically actuated to retain a magnetic object thereon;

FIG. 3 is a similar section showing the assembly magnetically deactuated to allow the object to be detached therefrom or to be freely movable thereon;

FIG. 4 is a sectional view of a portion of a modification of the assembly of FIG. 1;

FIG. 5 is a plan view diagrammatically illustrating a further magnetic retainer assembly according to the invention;

FIG. 6 is a similar view diagrammatically illustrating a further magnetic retainer assembly according to the invention;

FIG. 7 is a section of the assembly taken along line VII—VII in FIG. 6;

FIG. 8 is a similar section diagrammatically illustrating a modification of the structure of the assembly of FIG. 7;

FIG. 9 is a plan view diagrammatically illustrating a modification of the assembly of FIG. 6;

FIG. 10. is a perspective view diagrammatically illustrating a magnetic stand incorporating an embodiment of the invention in a base thereof;

FIGS. 11(a) and 11(b) are top plan views of the magnetic base of FIG. 11 when it is magnetically deactuated and actuated, respectively;

FIGS. 12(a) and 12(b) are sectional views of the magnetic base of FIGS. 11(a) and 11(b) taken along the lines A—A and B—B therein, respectively;

FIGS. 13(a) and 13(b) are similar views diagrammatically illustrating a modification of the magnetic base of FIGS. 12(a) and 12(b) when it is magnetically deactuated and actuated, respectively;

FIGS. 14(a) and 14(b) are similar views diagrammatically illustrating a further modification of the magnetic base of FIGS. 13(a) and 13(b) when it is magnetically deactuated and actuated, respectively;

FIG. 15 is a longitudinal sectional view of a further magnetic retainer assembly of the present invention;

FIG. 16 is a perspective view diagrammatically illustrating a pair of pieces held together by a deformable magnetic retainer assembly according to the invention;

FIGS. 17 to 19 are sectional views of different embodiments of the deformable magnetic retainer assembly seen in FIG. 16;

FIGS. 20(a) and 20(b) are a plan view and sectional view, respectively, of a further embodiment of the said deformable magnetic retainer assembly of the invention;

FIG. 21 is a sectional view diagrammatically illustrating another embodiment of the magnetic retainer assembly of the same class;

FIG. 22 is a perspective view illustrating a corrugated member being retained with a deformable magnetic retainer assembly according to the invention;

FIG. 23 is a sectional view illustrating the assembly of FIG. 22 taken along line XXIII—XXIII;

FIG. 24 is a plan view diagrammatically illustrating a further embodiment of the deformable magnetic retainer assembly according to the invention;

FIG. 25 is a sectional view of the assembly of FIG. 24 taken along line XXV—XXV; and

FIGS. 26 and 27 are views similar to those of FIGS. 24 and 25, respectively, of a further embodiment of the deformable magnetic retainer assembly of the invention.

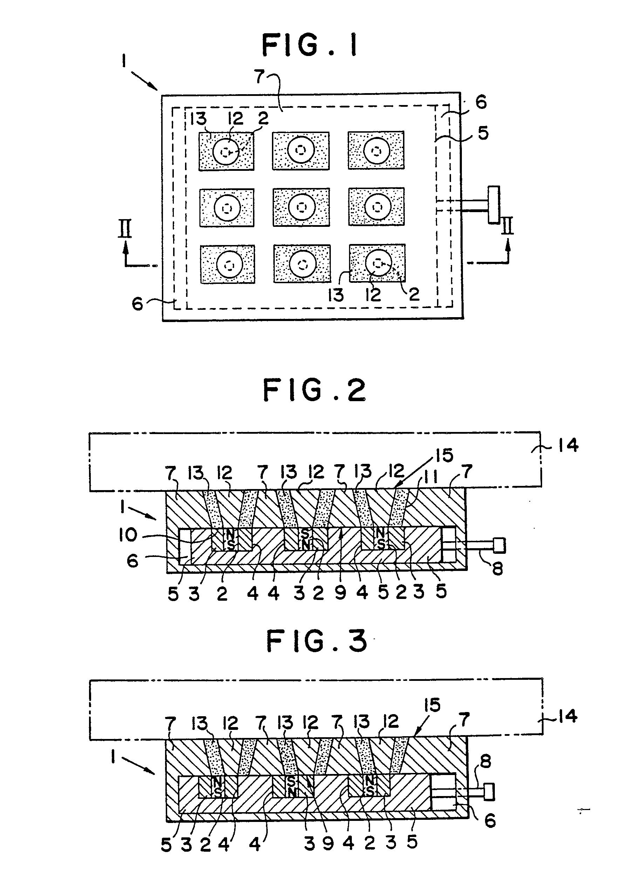

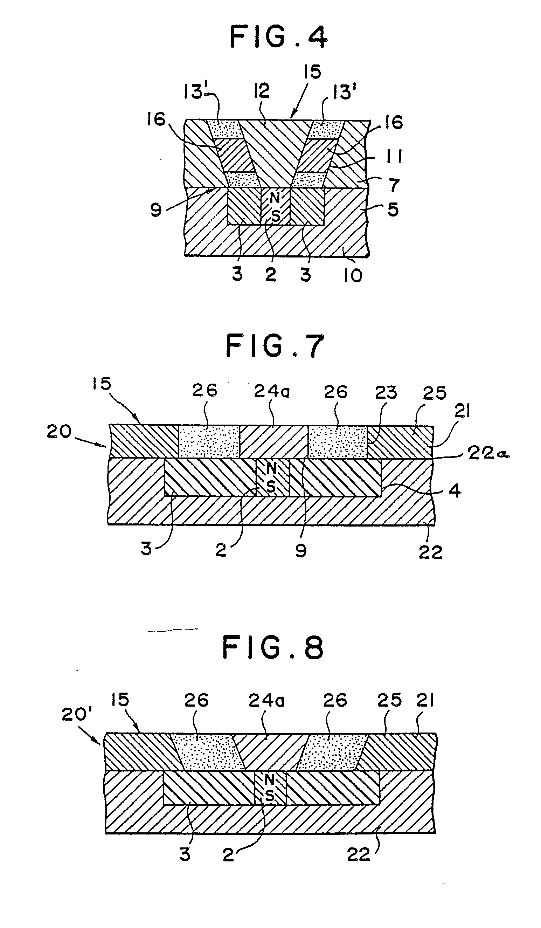

Referring first to FIGS. 1—3, a magnetic retainer assembly 1 according to the invention makes use of a plurality of permanent magnet bodies 2 which may each be columnar in shape and fittedly accommodated in a non-magnetic cylinder 3 coaxial therewith. The non-magnetic cylinders 3, which may be of plastics, are, in turn, fittedly accommodated in recesses 4 formed in a rectangular ferromagnetic plate 5 which may be of iron and is slidably received in a compartment 6 formed in a rectangular ferromagnetic block 7 which may also be of iron. The ferromagnetic plate 5 is movable slidably in the compartment 6 from right to left and *vice versa*, as viewed in the drawing, by means of a handle 8. One pole, N- or S-pole, or each permanent magnet 2 is arranged flush with the upper wall 9 of the ferromagnetic plate 5 and the upper face 10 of each non-magnetic cylinder 3. The ferromagnetic block 7 is formed with openings 11 each of which extends from its upper surface into the compartment 6, is tapered so as to be upwardly divergent and may be rectangular in cross-section. Each tapered opening 11 accepts a ferromagnetic core member 12 (e.g. of iron) coaxially therewith, which is in the form of a truncated cone with the peripheral surface spaced from the tapered opening 11 by a gap which is filled with a semi-magnetic material 13. The filling 13 may be composed of a synthetic resin or adhesive material mixed with particles of a magnetic material such as iron, a ferrite or an amorphous magnetic metal or alloy. The filling 13 is bonded to either the ferromagnetic block 7 or the ferromagnetic core member 12 or both. The ferromagnetic block 7 is shown located below a magnetizable object 14 such as a plate workpiece in contact with the lower surface 15 thereof. It will be seen that when the ferromagnetic plate 5 within the compartment 6 is moved to the position shown in FIG. 2, the core members 12, having their upper surfaces in contact with the magnetizable object 14, have their lower surfaces in contact with one pole of each permanent magnet 2 whose other pole is connected with the object 14 via the ferromagnetic plate 5 and the ferromagnetic block 7. A closed magnetic circuit is thus established individually for each permanent magnet 2 which individually produces a magnetic field, whereby the assembly 1 is magnetically secured to the magnetized object 14. In this state, each of the plural permanent magnets 2 is located coaxially with the corresponding tapered opening 11 and hence with the corresponding core or pole member 12. The plural permanent magnets 2 are of a uniform shape and size and are composed of a same material to individually produce magnetic fields of a uniform intensity. Accordingly, uniform forces of magnetic attraction are developed at uniformly distributed locations in the interface 15 between the ferromagnetic block 7 and the magnetic object 14. The result is a highly stabilized and firm retention of the assembly 1 to the object 14 or *vice versa*. When the ferromagnetic plate 5 is moved to the position shown in FIG. 3, the upper pole of each permanent magnet 2 comes below the semi-magnetic filling 13. The magnetic circuit which has been established is thus substantially broken individually for each permanent magnet 12, permitting the assembly 1 to be readily detached from the magnetic object 14. In case the assembly 1 is fixed, the object 14 can be detached from or becomes readily displaceable on the upper surface 15 of the ferromagnetic block 7. It will be understood that each pole area of each permanent magnet 2 should be substantially equal to or not greater than the lower end area of each core member 12 and should not be greater than the width of the filling or gap 13. The use of a semi-magnetic material, rather than a non-magnetic material, to fill the gap 13 between the ferromagnetic core member 12 and block 7 is advantageous in preventing each permanent 2 from demagnetizing or progressively losing its magnetic attractive power through its repeated attachment to and detachment from the magnetizable object 14. The upwardly divergent tapered formations of both the core member 12 and the opening 11 are found to assure an increased setting accuracy of the member 12 and the filling 13 in the opening 11.

FIG. 4 shows a modified arrangement in which the tapered ferromagnetic core or pole member 12 is supported in the tapered opening 11 formed in the ferromagnetic block 7. In this arrangement, a tapered ring 16 composed of a non-magnetic metal such as copper, brass or stainless steel is seated on the tapered walls of the opening 11 to support the tapered core or pole member 12. A semi-magnetic material as mentioned above can then be injected from above and below to fill the remaining spaces 13' between the ferromagnetic block 7 and core or pole member 12. An increased positioning accuracy of the member 12 within the opening 11 is here again attained.

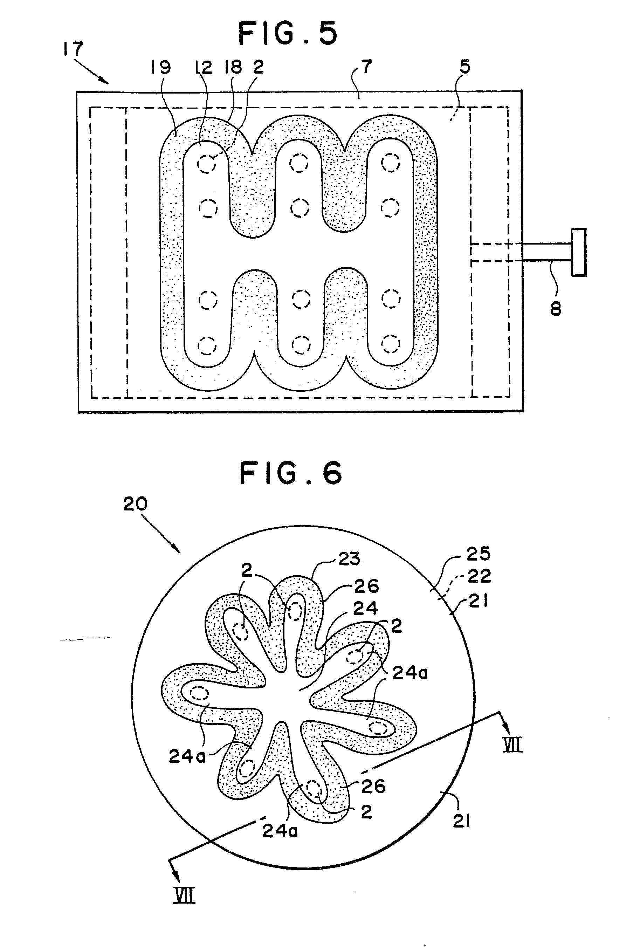

In a magnetic retainer assembly 17 shown in FIG. 5, a continuous groove 18 is formed in a portion of the rectangular ferromagnetic block 7 above the compartment 6 (FIGS. 2 and 3) in which the rectangular ferromagnetic plate 5 is slidably received as previously described. The groove 18 is filled with a semi-magnetic material 19 of the type previously described. In the rectangular plate 5 twelve permanent magnets 2 are shown as embedded in a manner as described previously. In this embodiment, a portion of the ferromagnetic block 7 inside the groove 18 is designed to constitute a unitary pole member 12 for the permanent magnets 2 so that when the plate 5 lies in the position shown, each permanent magnet 2 is allowed to establish a closed magnetic circuit with the pole member 12, a magnetizable object 14 (not shown), a portion of the block 7 outside the groove 18 and the plate 5, thereby magnetically attaching the assembly 17 firmly to the object 14. When the plate 5 is moved right or left by manoeuvring the handle 8 to such a position that the permanent magnets 2 are located immediately below the groove 18 and hence below the filling 19, the magnetic circuits are substantially broken to release the object 14 from the assembly 17.

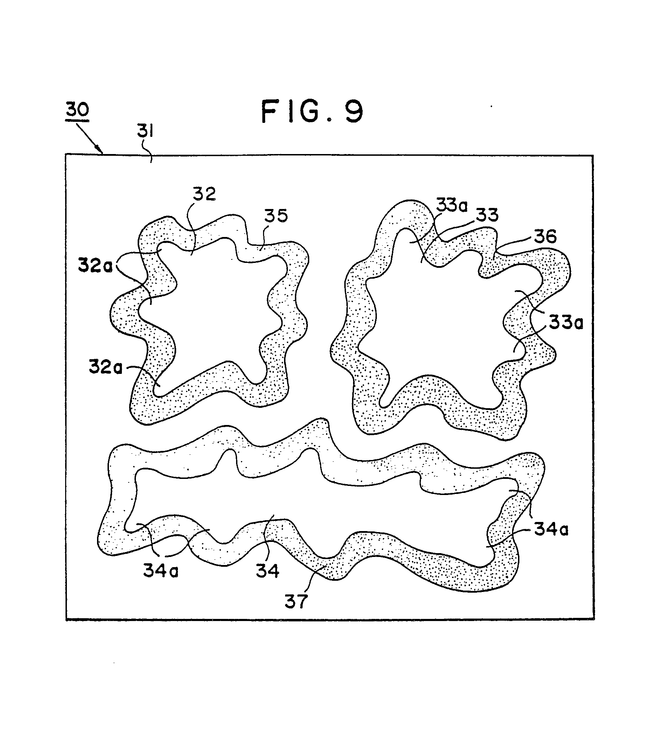

A magnetic retainer assembly 20 of the invention shown in FIGS. 6 and 7 comprises an upper member 21 mounted on a lower member 22 in intimate contact therewith at an interface 22*a*. Both members 21 and 22 may be disk plates as apparent from FIG. 6 and are composed of a ferromagnetic material. The disk plate constituting the upper member 21 is formed with a starfish-like groove 23 as shown and is thereby divided into an inner portion 24 and an outer portion 25. The groove 23 is filled with a semi-magnetic material 26 as specified previously which here serves to firmly bridge the inner and outer portions 24 and 25 of the upper member 21. The inner and outer portions 24 and 25 are accordingly formed with outer and inner contours, respectively, each of which is of starfish shape. The inner portion 24 is here formed with seven projections 24*a*, at end zones of which are seen seven permanent magnets 2, respectively. In this state, each permanent magnet 2 is located directly below the corresponding end portion 24*a* as shown in FIG. 7. The permanent magnet 2 being again columnar in shape and having opposite poles (N and S) at its upper and lower end faces, respectively, is embedded in a semi-magnetic disk 3 at a centre thereof such that the upper and lower end faces of the permanent magnet 2 are flush with the upper and lower surfaces of the disk 3, respectively. The disk 3 is, in turn, fittedly seated in a cylindrical cavity 4 formed in the disk plate constituting the lower member 22 so that the upper surface of the disk 3 is flush with the upper surface of the lower member 22. It will be seen that in this state, a magnetic path for the permanent magnet 2 is established and maintained through the projection 24*a*, a magnetizable object (not shown) to be retained on the surface 15, the upper plate 21 and the lower plate 22. The lower disk 22 is here arranged to be rotatable relative to the upper disk 21 about their common axis. When the lower disk 22 is rotated clockwise or counterclockwise to a position in which each permanent magnet 2 is located directly below the filling 26, the object is magnetically released from the assembly 20 or *vice versa*.

FIG. 8 shows a modification of the structure of FIG. 7 in which the outer and inner portions 24 and 25 of the upper member 21 are so cut as to form a starfish-like groove 26 such that its outer and inner flanks are tapered so as to be divergent upwardly and downwardly, respectively, to provide a modified sectional structure of the assembly 20′ similar to that of the assembly 1 shown in FIG. 3 and to achieve the essentially same functions previously described in connection therewith.

The inner and outer portions 24 and 25 of the upper member 21 divided by the starfish-like groove 26 can readily be prepared from a single disk plate by, for example, a traveling-wire electroerosion machine utilizing a continuous electrode wire continuously advanced axially through the disk plate. Electroerosion machining current is applied between the traveling wire and the disk plate while the traveling axis of the electrode wire and the disk plate is relatively displaced orthogonally to the traveling axis along a predetermined cutting path to achieve first the desired outer starfish-like contour of the inner portion 24 or the desired inner starfish-like contour of the outer portion 25. After removing one of these severed portions, the remaining portion is further subjected to traveling-wire electroerosion cutting operation to yield the desired inner starfish-like contour of the outer portion 25 or the desired outer starfish-like contour of the inner portion 24. The two machined portions are then positioned and the filling 26 is applied in the interstice or groove 26 to firmly bridge the two portions 24 and 25 together to yield a finished upper member 21 as shown in FIG. 6. The desired tapered flanks as shown in FIG. 8 are readily obtained by inclining the traveling electrode wire with respect to the disk plate at an angle corresponding to the desired angle of taper.

A magnetic retainer assembly 30 shown in FIG. 9 makes use of a rectangular plate 31 composed of a ferromagnetic material and having three inner portions 32, 33 and 34 separated by three shaped grooves 35, 36 and 37, respectively, from the outer portion of the plate 31. Each of the grooves 35, 36 and 37 is filled with a semi-magnetic material as previously described. Permanent magnets (not shown) are embedded in a lower plate (not shown) at respective positions corresponding to zones of projection 32*a* of the inner portion 32, zones of projection 33*a* of the inner portion 33 and zones of projections 34*a* of the inner portion 34 as previously described.

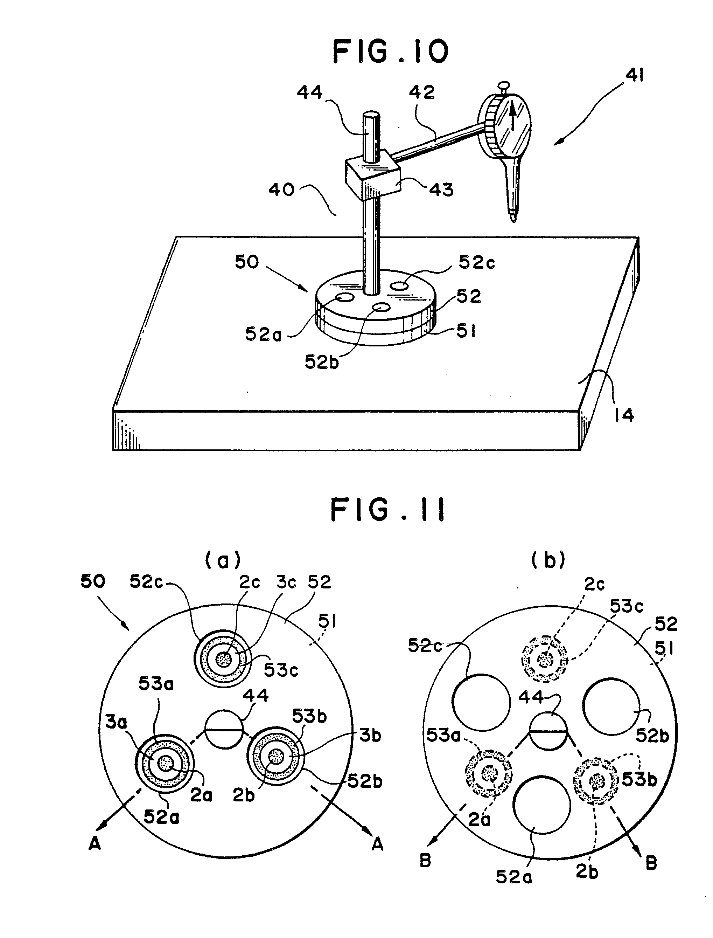

FIG. 10 shows a magnetic retainer assembly 50 according to the invention used as a base of a magnet stand 40 for supporting a measuring instrument such as a dial gauge 41 on a magnetizable object 14 such as a ferrous workpiece. The gauge 41 is shown supported by an arm 42 secured to a block 43 which is slidably movable on a post 44 and can be secured thereto at a desired vertical position by a fixing means (not shown).

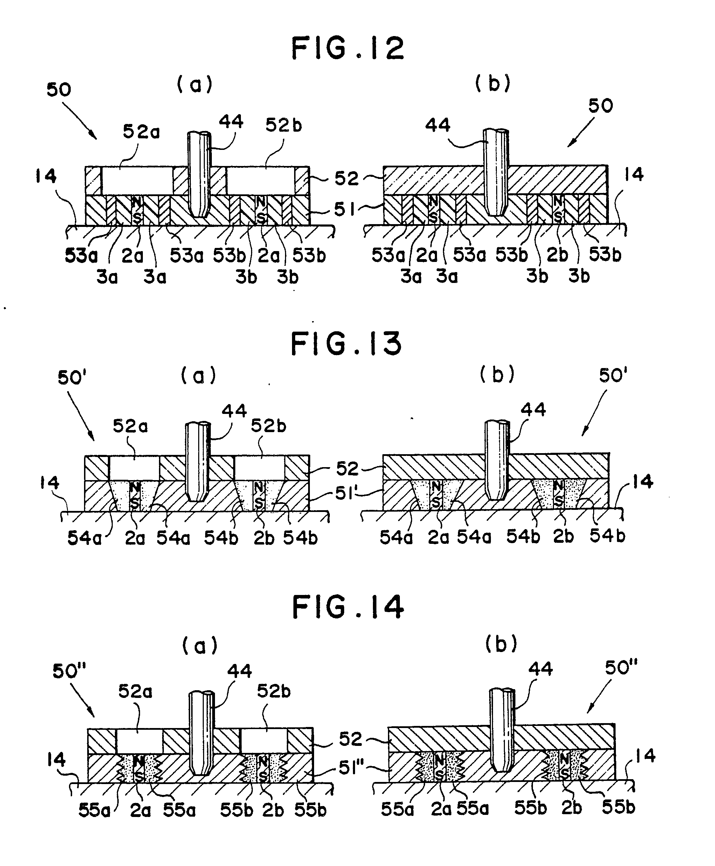

The magnet base 50 comprises a base disk plate 51 adapted to be placed on the magnetizable object 14 in intimate contact therewith and an upper disk plate 52 coaxially placed on the base disk plate 51 in intimate contact therewith. As shown in FIG. 10, the post 44 extends into the upper disk 52 which has three circular openings 52*a*, 52*b* and 52*c* which, as shown in FIG. 11, are positioned symmetrically about the post 44. The post 44 is secured to the base disk 51 whereas the upper disk 52 is arranged to be turnable about the post 44 relative to the fixed base disk 51. The upper disk 52 is composed of a ferromagnetic material whereas the base disk 51 is composed of a non-magnetic material. The post 44 is likewise composed of a non-magnetic material. Referring to FIG. 11(a), three small permanent magnets 2*a*, 2*b* and 2*c* composed of a rare-earth/cobalt material are seen located coaxially with and exposed through the openings 52*a*, 52*b* and 52*c*, respectively. Referring also to FIG. 12(a), each of the permanent magnets 2*a*—2*c* is cylindrical-columnar in shape having two opposed poles (N and S) at its parallel upper and lower faces and is fittedly retained with a cylinder 3*a*, 3*b*, 3*c* of a semi-magnetic material as previously specified. The cylinder 3*a*, 3*b*, 3*c* is, in turn, fittedly retained in a cylinder 53*a*, 53*b*, 53*c* of a ferromagnetic material which is in turn embedded in the base disk 51 of non-magnetic material.

When the upper plate 52 is in the position shown in FIGS. 11(a) and 12(a), it will be seen that each of the openings 52*a*, 52*b* and 52*c* provides an air gap of large reluctance such that the assembly 50 can readily be detached from the retaining plate object 14. When the upper plate 52 is turned to the position shown in FIGS. 11(b) and 12(b), the openings 52*a*, 52*b* and 52*c* are removed from the upper faces of the permanent magnets 2*a*—2*c* so that each of the magnets 2 can establish a magnetic path of high flux conductance through the upper disk 52, the ferromagnetic cylinder 53 and the magnetic object 14, thereby firmly locking the assembly 50 onto the magnetized object 14.

In a modified magnetic base 50′ shown in FIGS. 13(a) and 13(b), not only an upper disk 52 formed with openings 52*a*, 52*b* and 52*c* but a base disk 51′ is composed of a ferromagnetic material, and each of permanent magnets 2*a*, 2*b* and 2*c* is retained in a semi-magnetic material filled in an opening 54*a*, 54*b*, 54*c* which is formed in the ferromagnetic base disk 51′ and is preferably tapered as shown for the reason previously noted.

The semi-magnetic material for use in the practice of the invention preferably comprises an adhesive of, say, epoxy-family, phenol-family, acryl-family, styrene-family or cyane-family in which particles composed of a ferromagnetic material such as iron, permalloy, sendust or amorphous magnetic metal are uniformly distributed. The magnetic particles should be of a particle size ranging between 0.1 and 50 micrometres. Tapes of magnetic material, say, of a thickness of 5 microns and a length of 10 mm may also be used. Furthermore, particles of a permanent magnetic material such as a ferrite, an iron-chromium-cobalt alloy or a rare-earth/cobalt material are useful.

In a further modification 50" of FIGS. 14(a) and 14(b), each opening 55*a*, 55*b*, 55*c* formed in a ferromagnetic base disk 51" to be filled with the semi-magnetic material to accommodate the permanent magnet 2*a*, 2*b*, 2*c* is formed with a saw-toothed wall as shown. Such rugged formations in the cylindrical wall of each opening is advantageous in firmly retaining the semi-magnetic material or adhesive injected and set therein to retain the permanent magnet 2*a*, 2*b*, 2*c*.

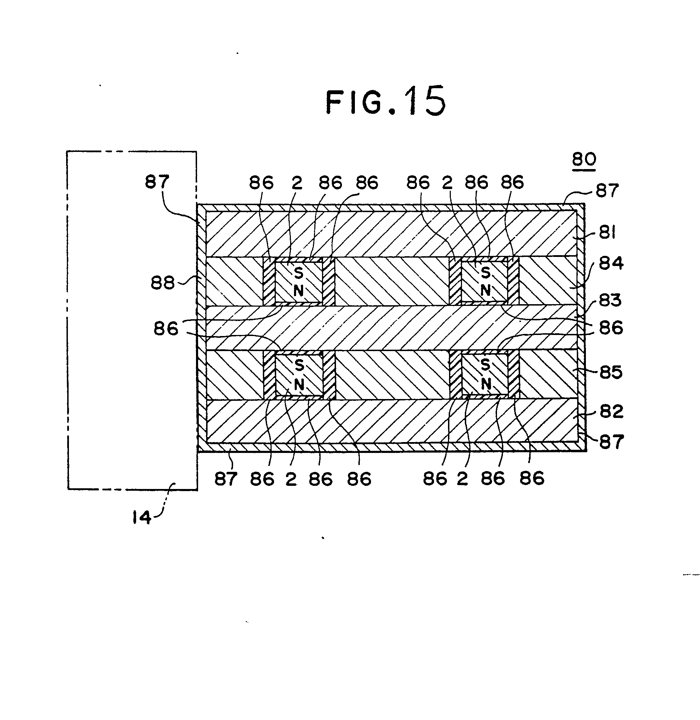

A magnetic retainer assembly 80 shown in FIG. 15 secured onto or retaining a magnetic object 14 comprises five parallel layers 81—85 of which the outermost and centre layers 81, 82 and 83 are uniformly composed of a ferromagnetic substance such as an iron material. Each of the other two layers 84 and 85 incorporates a pair of permanent magnets 2 which may again be disk-shaped with their respective poles as shown. Each permanent magnet 2 is accommodated in a receptacle of a semi-magnetic material 86 which is in turn embedded in a non-magnetic substance constituting the layer 84, 85. The semi-magnetic material 86 is here again composed of an adhesive material having fine particles of a magnetic material uniformly distributed therein as previously described. The assembly 80 is completed with a thin layer 87 of a high-hardness material such as titanium, titanium-nitride or titanium coated thereon. It is desirable that this layer be applied at least on the retention surface 88 of the assembly 80 to protect it against wear and abrasion. The layer 87 may be deposited on the surface by using electroplating, vapor deposition, sputtering or ion plating.

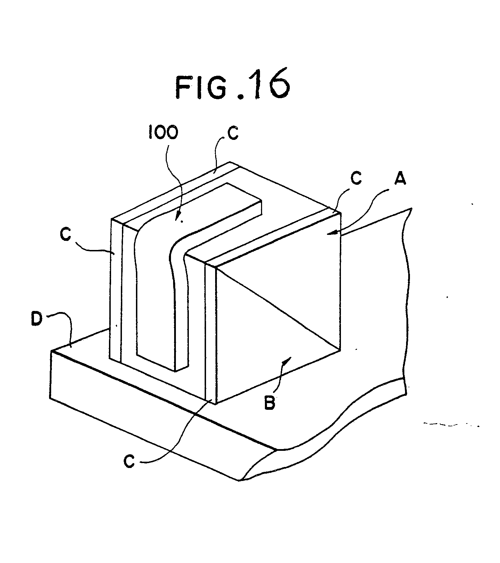

In FIG. 16, a pair of magnetizable blocks *A* and *B* are shown held together with a novel deformable magnetic retainer assembly 100 according to the invention and thereby held on a plate *D*. Side portions *C* of each block *A*, *B* may be non-magnetic. It is seen that the assembly 100 is deformed or deflected to form an angle of 90° or more. Such a high degree of deflection has been practically unrealistic with the conventional deformable magnetic retainer.

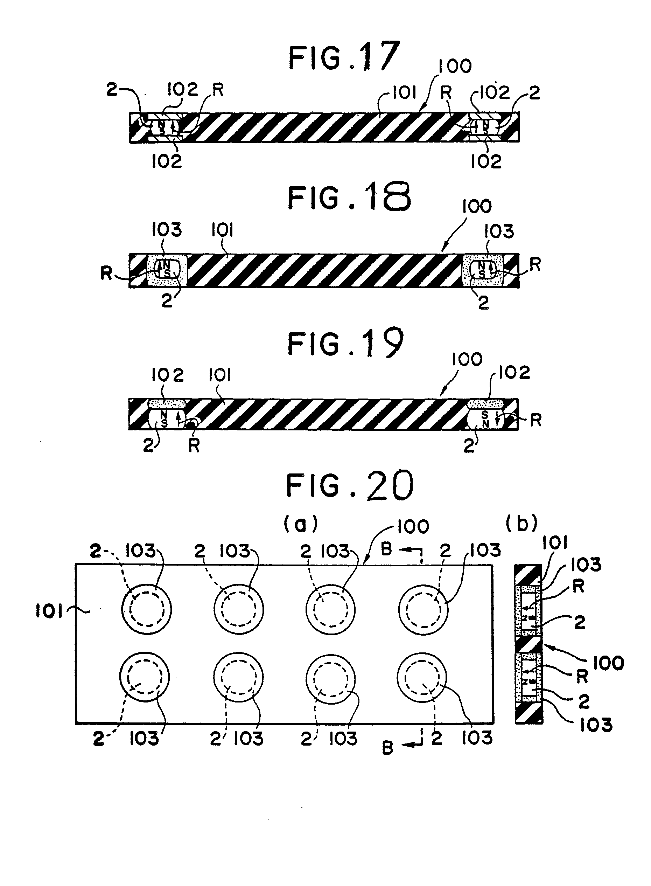

An embodiment of the assembly 100 shown in FIG. 17 comprises an elongate matrix of deformable material 101 uniformly composed of, say, rubber and a pair of permanent magnets 2 embedded at two end regions of the elongate matrix 101. Each permanent magnet 2 is shown having its axis of magnetization *R* perpendicular to the wider surfaces of the elongate matrix 101. Each permanent magnet 2 is advantageously shaped to be greater in diameter at its centre zone between the N and S poles so as to be not easily dislodged from the matrix 101. In this embodiment, the two magnets 2 are widely spaced apart and bridged only by the uniform deformable material of the matrix 101 so that the cracking problem may entirely be eliminated.

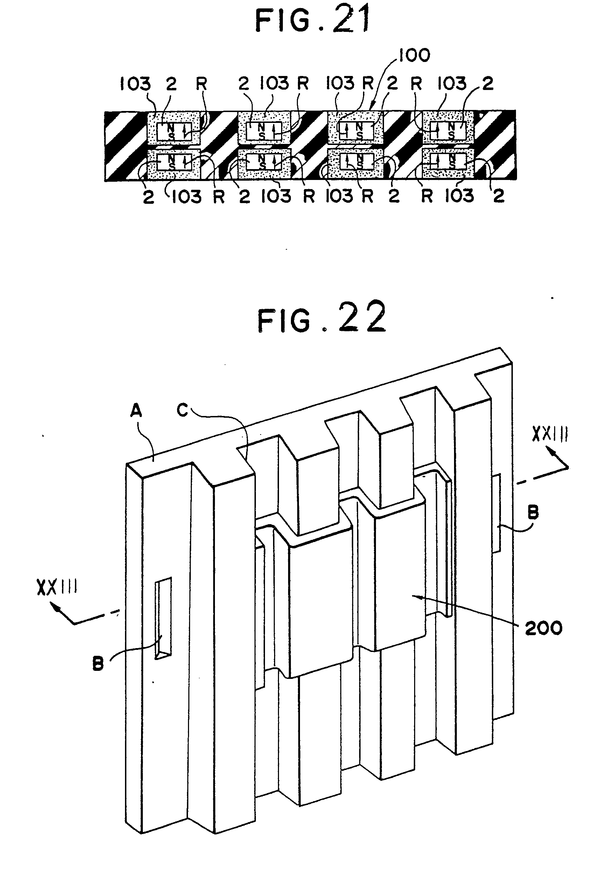

Each permanent magnet 2 is embedded in the matrix 101 with two semi-magnetic plates 102 in contact with its opposed pole faces and exposed flush with the surfaces of the matrix 101. Each semi-magnetic plate 102 may be composed of a deformable material in which fine particles of a ferromagnetic material are uniformly distributed. The plates 102 advantageously serve to protect each permanent magnet against wear, and further serve to prevent demagnetization of each permanent magnet 2 as previously described. Similar improvements are achieved by embedding each permanent magnet 2 in a body of semi-magnetic material 103 as shown in FIG. 18 or by providing as in FIG. 19 a single plate 102 in contact with one pole face (upper) of each permanent magnet 2. Permanent magnets 2 and their individually associated semi-magnetic bodies 103 may be arranged in the matrix 101 of uniform deformable material in a plurality of longitudinal or lateral rows as shown in FIGS. 20(a) and 20(b) or of vertical rows as shown in FIG. 21.

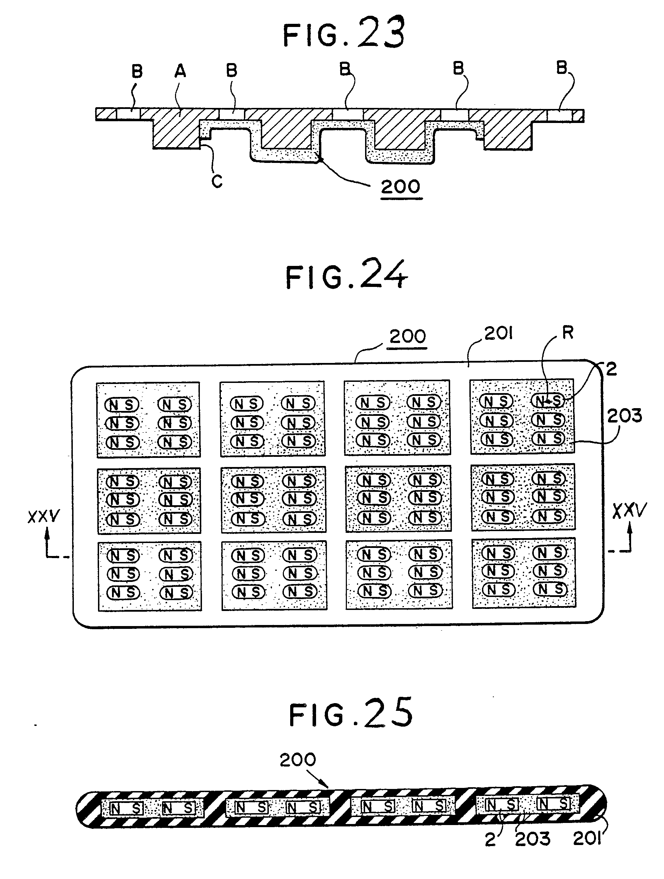

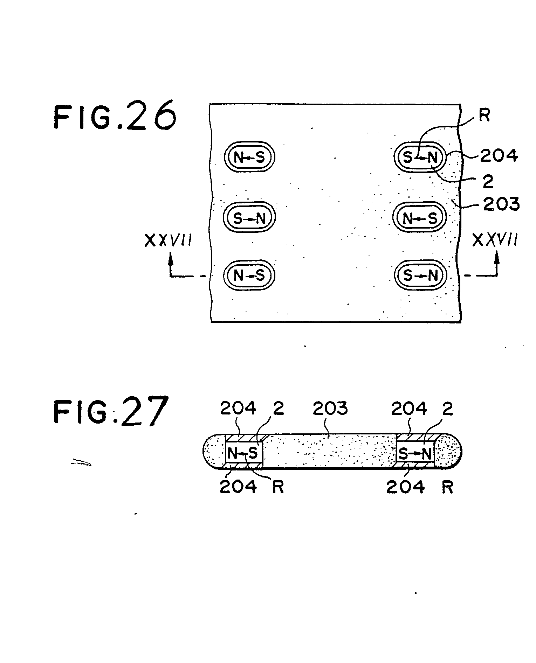

FIGS. 22 and 23 show a deformable magnetic retainer assembly 200 as applied to a corrugated ferromagnetic body *A* having a plurality of parallel elongate recesses *C* in each of which an elongate opening *B* is provided. The assembly 200 is deformed to closely conform to the recesses *C* and the adjacent projections and is magnetically secured thereto and so seals up various openings *B*. A deformable magnetic retainer assembly is quite convenient because it eliminates the need for bolting and keeps a securable object free from contamination. The deformable magnetic retainer assembly 200 according to the invention may take the form diagrammatically shown in FIGS. 24 and 25. The assembly 200 shown comprises a matrix 201 composed uniformly of a deformable material of a high degree of deformability in which a multiplicity of sub-matrices 203 composed of a deformable material of a relatively low deformability are regularly distributed. Each sub-matrix 203 has a plurality of permanent magnets 2 regularly arranged therein. The double matrix structure assures both firm retention of permanent magnets 2 therein and due deformability of the assembly. Each permanent magnet 2 is enclosed within a deformable semi-magnetic material 204 or sandwiched with a pair of plates 204 of deformable semi-magnetic material as shown in FIGS. 26 and 27. The deformable semi-magnetic material consists of a deformable material in which fine magnetic particles are uniformly distributed.

**Claims**

1. A magnetic retainer assembly (1) for selectively securing thereto and detaching therefrom a magnetizable object (14), comprising:

a plurality of permanent columnar or disk-shaped magnets (2) of a like shape and size, each of which is axially magnetized and has two opposed magnetic poles at its two opposite end faces, the magnets (2) being arranged respectively at predetermined positions regularly spaced apart and constituting a predetermined set in the assembly (1) so as to individually produce magnetic fluxes of a uniform strength;

support means (5) having each of said permanent magnets (2) individually at least laterally embedded therein for holding said magnets (2) at said spaced-apart positions in an essentially magnetically insulating relationship with each other;

first magnetic-path forming means (7, 12) associated with said support means (5) for magnetically completing said opposed poles of each of said permanent magnets (2) individually with said magnetizable object (14) through a first magnetic circuit (12, 14, 7, 5) of a sufficiently low magnetic reluctance to cause said assembly (1) to be attached to said object (14) or vice versa; and

second magnetic-path forming means (13) associated with said support means (5) for establishing, for each of said permanent magnets (2) and parallel to said first magnetic circuit, a second magnetic circuit (13, 14, 7, 5) of a relatively high magnetic reluctance for shunting said first magnetic circuit when said object (14) is to be, or remains, detached from said assembly, which second magnetic-path forming means (13) incorporates semi-magnetic material, and which high magnetic reluctance is such as to facilitate detachment of a said object from said assembly but prevent any substantial demagnetization of the associated magnet with successive detachments of such objects from said assembly.

2. An assembly according to Claim 1 wherein said permanent magnets (2) have their axes of magnetization essentially in parallel with one another.

3. An assembly according to Claim 2 wherein said axes of magnetization are oriented to be substantially perpendicular to the surface of said assembly (1) to be engaged with said object (14).

4. An assembly according to Claim 1, 2 or 3 wherein each of said permanent magnets (2) is flanked in said support means (5) with a respective non-magnetic member (3) for holding it laterally magnetically insulated from the other permanent magnets (2).

5. An assembly according to Claim 4 wherein said non-magnetic member (3) is retained in a first ferromagnetic member (5) constituting said first magnetic-path forming means and arranged securely in contact with one pole of each said permanent magnet (2) whose other pole is adapted in contact with a second ferromagnetic member (12) constituting said first magnetic-path forming means and adapted for contact with said magnetizable object (14) along a surface (15) thereof, thereby establishing said first magnetic circuit.

6. An assembly according to Claim 5 wherein said second ferromagnetic member (12) includes a plurality of columnar formations (12) each bridging said other pole and said magnetizable object (14) for establishing said first magnetic circuit, said each columnar formation (12) being retained in a respective member (13) which is magnetically less conductive than said first and second ferromagnetic members (5, 12) to constitute said second magnetic-path forming means and which is adapted to separate said each formation (12) from the remainder (7) of said second ferromagnetic member while forming said second magnetic circuit.

7. An assembly according to Claim 6 wherein each said magnetically less conductive member (13) comprises a semi-magnetic member composed of a magnetically nonconductive material in which a magnetically conductive material is distributed.

8. An assembly according to Claim 6 or 7 wherein said first ferromagnetic member (5) is arranged in sliding contact with said second ferromagnetic member (12) so as to be slidably movable relative thereto, further comprising means (8) for moving said first ferromagnetic member (5) relative to said second ferromagnetic member (12) to bring said other pole in contact with said magnetically less conductive member (13), thereby permitting said magnetizable object (14) to be released from said assembly or vice versa while establishing said second magnetic circuit.

9. An assembly according to Claim 8 wherein said first ferromagnetic member (5) is rectangular in shape and retained in a rectangular compartment (6) formed in said second ferromagnetic member (7) so as to be slidably movable therein and said moving means comprises handle means (8) passing through said second ferromagnetic member (7) and having one end portion fixed to said first ferromagnetic member (5) and the other end portion located outside said compartment (6).

10. An assembly according to Claim 6, 7, 8 or 9 wherein each of said ferromagnetic columnar formations (12) is tapered so as to be divergent towards said magnetizable object (14).

11. An assembly according to Claim 10, further comprising a tapered ring member (FIG. 4: 16) for fittedly accepting said tapered ferromagnetic columnar formation (12) therethrough within said magnetically less conductive member (13).

12. An assembly according to Claim 5 when said second ferromagnetic member (FIGS. 1 to 4: 7; FIGS. 6 to 8: 21; FIG. 9: 31) comprises first and second portions separated by a continuous closed-loop groove (18; 23; 35, 36, 37) filled with a magnetically less conductive material (19, 26) constituting said second magnetic-path forming means and said plurality of permanent magnet members (2) are located adjacent to said first portion (12; 24; 32, 33, 34) at the inner side of said closed-loop groove.

13. An assembly according to Claim 12 wherein said first ferromagnetic member (5, 22) is arranged in sliding contact with said second ferromagnetic member (7, 21, 31) so as to be slidably movable relative thereto, further comprising means (8) for moving said first ferromagnetic member relative to said second ferromagnetic member to bring each said other pole in contact with said magnetically less conductive member (19, 26) filling said groove (18; 23; 35, 36, 37), thereby permitting said magnetizable object (14) to be released from said assembly or vice versa while establishing said second magnetic circuit.

14. An assembly according to Claim 13 wherein said first ferromagnetic member (5) is rectangular in shape and retained in a rectangular compartment (6) formed in said second ferromagnetic member (7) so as to be slidably movable therein and said moving means comprises handle means (FIG. 5: 8) passing through said second ferromagnetic member and having one end portion secured to said first ferromagnetic member and the other end portion located outside said compartment.

15. An assembly according to Claim 12, 13 or 14 wherein said continuous closed-loop groove (23; 35, 36, 37) has a plurality of projections (24*a*; 32*a*, 33*a*, 34*a*) defined by the periphery of said inner portion (24; 32, 33, 34) of the second ferromagnetic member, and said permanent magnets (2) are located adjacent to regions of said projections, respectively.

16. An assembly according to Claim 15 wherein said first and second ferromagnetic members (FIGS. 6 to 8: 22, 21) are in the forms of disks arranged to be substantially coaxial with each other and relatively turnable about a common axis while holding a mutual sliding contact to bring said other pole in contact with said inner portion (24) to establish said first magnetic circuit, thereby permitting said assembly to be magnetically secured to said magnetizable object (14) and to bring said other pole in contact with said magnetically less conductive material (26) to establish said second magnetic circuit, thereby permitting said object (14) to be released from said assembly or vice versa.

17. An assembly according to any one of Claims 12 to 16 wherein said magnetically less conductive material (19, 26) is a semi-magnetic member composed of a magnetically non-conductive material having a magnetically conductive material distributed therein.

18. An assembly according to any one of Claims 12 to 17 wherein a plurality of such continuous closed-loop grooves (FIG. 9: 35, 36, 37) are formed in said second ferromagnetic member (31).

19. An assembly according to Claim 1, 2 or 3 wherein each of said permanent magnets (2; FIG. 11: 2*a*, 2*b*, 2*c*) is flanked in said support member with a magnetically less conductive material (3; FIGS. 11 and 12: 3*a*, 3*b*, 3*c*; FIG. 13: in 54*a*, 54*b*, 54*c*; FIG. 14: in 55*a*, 55*b*, 55*c*; FIG. 15: 86; FIG. 18: 103; FIG. 24: 203; FIG. 26: 204).

20. An assembly according to Claim 19 wherein said magnetically less conductive member (FIG. 11: 3*a*, 3*b*, 3*c*) is retained in a first ferromagnetic member (53*a*, 53*b*, 53*c*; FIGS. 12 and 13: 51′, 51″) constituting said first magnetic-path forming means and adapted for contact with said magnetizable object (14) and one pole of each of said plurality of permanent magnets (2*a*, 2*b*, 2*c*) is adapted for contact with said magnetizable object, further comprising a second ferromagnetic member (52) associated with said first ferromagnetic member so as to be slidably movable relative thereto to engage with the other pole of each of said permanent magnets and said first ferromagnetic member simultaneously to establish said first magnetic circuit with said magnetizable object, thereby magnetically securing said assembly (50; 50′; 50″) to said object (14) and to disengage from said other pole, thereby permitting said object to be released from said assembly or vice versa while establishing said second magnetic circuit through said magnetically less conductive material (3*a*, 3*b*, 3*c*).

21. An assembly according to Claim 20 wherein said first ferromagnetic member is retained in a non-magnetic disk (FIGS. 10 to 12: 51) constituting said support means and adapted for intimate contact with said surface of the magnetizable object (14) and said second ferromagnetic member comprises a ferromagnetic disk (52) arranged coaxially with said non-magnetic disk (51) so as to be turnable about a common axis while holding a sliding contact therebetween, said ferromagnetic disk (52) being formed with openings (52*a*, 52*b*, 52*c*) arranged symmetrically about said axis and corresponding in number to said permanent magnets (2*a*, 2*b*, 2*c*) whereby when each of said openings (52*a*, 52*b*, 52*c*) is located adjacent to said other pole of the corresponding permanent magnet, said assembly is essentially magnetically released from said magnetizable object while establishing said second magnetic circuit through said magnetically less conductive material and when said openings are located remote from said other poles of the permanent magnets, said first magnetic circuit is established for each said permanent magnet to magnetically secure said assembly to said object.

22. An assembly according to Claim 20 wherein said first ferromagnetic member comprises a first ferromagnetic disk (FIGS. 13 and 14: 51′, 51″) constituting said first magnetic path forming means and adapted for intimate contact with said surface of the magnetizable object (14), and said second ferromagnetic member comprises a second ferromagnetic disk (52) arranged coaxially with said first ferromagnetic disk (51′, 51″) so as to be turnable about a common axis while holding a sliding contact therebetween, said second ferromagnetic disk (52) being formed with openings (52*a*, 52*b*, 52*c*) arranged symmetrically about said axis and corresponding in number to said permanent magnets (2*a*, 2*b*, 2*c*) whereby when each of said openings is located adjacent to said other pole of the corresponding permanent magnet, said assembly is essentially magnetically released from said magnetizable object while establishing said magnetic circuit through said magnetically less conductive material, and when said openings are located remote from said other poles of the permanent magnets, said first magnetic circuit is established for each of said permanent magnets to magnetically secure said assembly to said object.

23. An assembly according to any one of Claims 19 to 22 wherein said magnetically less conductive material (3; 3*a*—*c*; 54*a*—*c*; 86; 103; 204) comprises a semi-magnetic member composed of a magnetically nonconductive material having a magnetically conductive material distributed therein.

24. An assembly according to any one of Claims 1 to 4 comprising a plurality of alternate layers of magnetic and non-magnetic material (FIG. 15: 81, 82, 83; 84, 85), the layers of non-magnetic material (84, 85) constituting said support means and incorporating said permanent magnets (2), each of said permanent magnets being flanked with a magnetically less conductive material (86) constituting said second-path forming means.

25. An assembly according to Claim 24 wherein at least the face of the assembly to be in contact with the object is provided with a layer (FIG. 15: 87) of very hard material such as titanium or titanium-nitride, or with a titanium coating.

26. An assembly according to any one of Claims 1 to 3 wherein the support means is an elongate matrix (FIGS. 18 and 20: 101; FIGS. 24 to 27: 201) of deformable material capable of withstanding a high degree of deformation without forming cracks, such as rubber.

27. An assembly according to Claim 26 wherein each of the permanent magnet members (2) has at least one face covered with a magnetic or semi-magnetic material (FIGS. 18, 20 and 21: 103; FIG. 19: 102; FIGS. 24 to 27: 204).

28. An assembly according to any one of Claims 1 to 3 wherein the support means is formed by a matrix of a deformable material (FIGS. 24 to 27: 201) of a high degree of deformability in which a plurality of sub-matrices (203) composed of a deformable material of a relatively low deformability are regularly distributed, each sub-matrix having a plurality of said permanent magnets (2) regularly arranged therein.

29. An assembly according to Claim 28 wherein each permanent magnet (2) is enclosed in a deformable semi-magnetic material (FIG. 26: 204) or sandwiched between plates of deformable semi-magnetic material (FIG. 27: 204).

**Patentansprüche**

1. Magnetische Halterungsanordnung (1) zum selektiven Befestigen und Lösen eines magnetisierbaren Gegenstands (14), umfassend:

mehrere säulen- oder scheibenförmige Permanentmagnete (2) gleicher Form und Größe, deren jeder in Axialrichtung magnetisiert ist und an seinen beiden entgegengesetzten Endflächen zwei entgegengesetzte Magnetpole aufweist, wobei die Magnete (2) jeweils an vorbestimmten Stellen in regelmäßigen Abständen voneinander angeordnet sind und eine vorbestimmte Gruppe in der Anordnung (1) bilden, so daß sie einzeln Magnetfelder gleichförmiger Feldstärke erzeugen;

ein Tragorgan (5), in dem jeder Permanentmagnet (2) einzeln wenigstens seitlich eingebettet ist, so daß die Magnete (2) an den beabstandeten Stellen im wesentlichen magnetisch isolierend in bezug aufeinander gehalten sind;

dem Tragorgan (5) zugeordnete erste magnetpfadbildende Mittel (7, 12), die die entgegengesetzten Pole jedes Permanentmagnets (2) magnetisch einzeln mit dem magnetisierbaren Gegenstand (14) durch einen ersten Magnetkreis (12, 14, 7, 5) verbinden, dessen magnetischer Widerstand hinreichend niedrig ist, so daß die Anordnung (1) an dem Gegenstand (14) befestigbar ist bzw. umgekehrt; und

dem Tragorgan (5) zugeordnete zweite magnetpfadbildende Mittel (13), die für jeden Permanentmagnet (2) parallel zu dem ersten Magnetkreis einen zweiten Magnetkreis (13, 14, 7, 5) relativ hohen magnetischen Widerstands bilden, so daß der erste Magnetkreis nebengeschlossen wird, wenn der Gegenstand (14) von der Anordnung gelöst werden soll bzw. gelöst bleibt, wobei die zweiten magnetpfadbildenden Mittel (13) halbmagnetischen Werkstoff aufweisen, und wobei der hohe magnetische Widerstand derart ist, daß das Lösen des Gegenstands von der Anordnung erleichtert, jedoch eine erhebliche Entmagnetisierung des zugeordneten Magnets durch aufeinanderfolgendes Lösen solcher Gegenstände von der Anordnung verhindert wird.

2. Anordnung nach Anspruch 1, wobei die Magnetisierungsachsen der Permanentmagnete (2) im wesentlichen parallel zueinander verlaufen.

3. Anordnung nach Anspruch 2, wobei die Magnetisierungsachsen so orientiert sind, daß sie zu der mit dem Gegenstand (14) in Kontakt gelangenden Oberfläche der Anordnung (1) im wesentlichen senkrecht verlaufen.

4. Anordnung nach Anspruch 1, 2 oder 3, wobei jeder der Permanentmagnete (2) in dem Tragorgan (5) von einem jeweiligen nichtmagnetischen Element (3) flankiert ist, das ihn gegenüber den übrigen Permanentmagneten (2) seitlich magnetisch isoliert hält.

5. Anordnung nach Anspruch 4, wobei das nichtmagnetische Element (3) in einem ersten ferromagnetischen Element (5), das die ersten magnetpfadbildenden Mittel bildet und in festem Kontakt mit einem Pol jedes Permanentmagnets (2) angeordnet ist, gehalten ist, wobei der jeweils andere Pol in Kontakt mit einem zweiten ferromagnetischen Element (12) liegt, das die zweiten magnetpfadbildenden Mittel bildet und zum Kontakt mit dem magnetisierbaren Gegenstand (14) entlang seiner einen Oberfläche (15) ausgebildet ist, wodurch der erste Magnetkreis gebildet wird.

6. Anordnung nach Anspruch 5, wobei das zweite ferromagnetische Element (12) eine Mehrzahl säulenartige Ausbildungen (12) aufweist, die jeweils den anderen Pol und den magnetisierbaren Gegenstand (14) überbrücken unter Bildung des ersten Magnetkreises, wobei jede säulenartige Ausbildung (12) in einem entsprechenden Element (13) festgelegt ist, das magnetisch weniger leitfähig ist als das erste und das zweite ferromagnetische Element (5, 12) und die zweiten magnetpfadbildenden Mittel bildet und das jede Ausbildung (12) vom Rest (7) des zweiten ferromagnetischen Elements trennt und den zweiten Magnetkreis bildet.

7. Anordnung nach Anspruch 6, wobei jedes magnetisch weniger leitfähige Element (13) ein halbmagnetisches Element ist, das aus einem magnetischen Nichtleiter besteht, in dem ein magnetischer Leiter verteilt ist.

8. Anordnung nach Anspruch 6 oder 7, wobei das erste ferromagnetische Element (5) in Gleitkontakt mit dem zweiten ferromagnetischen Element (12) so angeordnet ist, daß es relativ dazu gleitverschiebbar ist, ferner umfassend Mittel (8) zum Bewegen des ersten ferromagnetischen Elements (5) relativ zum zweiten ferromagnetischen Element (12), um den anderen Pol mit dem magnetisch weniger leitfähigen Element (13) in Kontakt zu bringen, so daß der magnetisierbare Gegenstand (14) von der Anordnung lösbar ist bzw. umgekehrt, während der zweite Magnetkreis gebildet wird.

9. Anordnung nach Anspruch 8, wobei das erste ferromagnetische Element (5) Viereckform hat und in einem in dem zweiten ferromagnetischen Element (7) gebildeten viereckigen Fach (6) so gehalten ist, daß es darin verschiebbar ist, und wobei die Bewegungsmittel einen Handgriff (8) aufweisen, der das zweite ferromagnetische Element (7) durchsetzt und dessen einer Endabschnitt an dem ersten ferromagnetischen Element (5) festgelegt und dessen anderer Endabschnitt außerhalb des Fachs (6) angeordnet ist.

10. Anordnung nach Anspruch 6, 7, 8 oder 9, wobei jede der ferromagnetischen säulenartigen Ausbildungen (12) derart konisch ist, daß sie in Richtung zu dem magnetisierbaren Gegenstand (14) divergiert.

11. Anordnung nach Anspruch 10, ferner umfassend einen Konusring (Fig. 4: 16), der von der konischen ferromagnetischen säulenartigen Ausbildung (12) innerhalb des magnetisch weniger leitfähigen Elements (13) im Paßsitz durchsetzt ist.

12. Anordnung nach Anspruch 5, wobei das zweite ferromagnetische Element (Fig. 1—4: 7; Fig. 6—8: 21; Fig. 9: 31) zwei Hälften umfaßt, die von einer ununterbrochenen Endlosnut (18; 23; 35, 36, 37) getrennt sind, die mit einem magnetisch weniger leitfähigen Werkstoff (19, 26) gefüllt ist, der die zweiten magnetpfadbildenden Mittel darstellt, und wobei die Mehrzahl Permanentmagnete (2) angrenzend an die erste Hälfte (12; 24; 32, 33, 34) an der Innenseite der Endlosnut positioniert ist.

13. Anordnung nach Anspruch 12, wobei das erste ferromagnetische Element (5, 22) in Gleitkontakt mit dem zweiten ferromagnetischen Element (7, 21, 31) so angeordnet ist, daß es relativ dazu gleitbewegbar ist, ferner umfassend Mittel (8) zum Bewegen des ersten ferromagnetischen Elements relativ zu dem zweiten ferromagnetischen Element, um jeden entsprechenden anderen Pol in Kontakt mit dem die Nut (18; 23; 35, 36, 37) ausfüllenden, magnetisch weniger leitfähigen Element (19, 26) zu bringen, so daß der magnetisierbare Gegenstand (14) von der Anordnung lösbar ist bzw. umgekehrt, während der zweite Magnetkreis gebildet wird.

14. Anordnung nach Anspruch 13, wobei das erste ferromagnetische Element (5) Viereckform hat und in einem viereckigen Fach (6) in dem zweiten ferromagnetischen Element (7) so gehalten ist, daß es darin gleitverschiebbar ist, und die Bewegungsmittel einen Handgriff (Fig. 5: 8) aufweisen, der das zweite ferromagnetische Element durchsetzt und dessen eines Ende an dem ersten ferromagnetischen Element gesichert ist und dessen anderes Ende außerhalb des Fachs liegt.

15. Anordnung nach Anspruch 12, 13 oder 14, wobei die ununterbrochene Endlosnut (23; 35, 36, 37) eine Mehrzahl Vorsprünge (24a; 32a, 33a, 34a) aufweist, die durch den Rand der inneren Hälfte (24; 32, 33, 34) des zweiten ferromagnetischen Elements definiert sind, und wobei die Permanentmagnete (2) angrenzend an jeweilige Bereiche der Vorsprünge positioniert sind.

16. Anordnung nach Anspruch 15, wobei das erste und das zweite ferromagnetische Element (Fig. 6—8: 22, 21) Scheiben sind, die im wesentlichen koaxial zueinander angeordnet und um eine gemeinsame Achse relativ drehbar sind, während sie einen gegenseitigen Gleitkontakt unterhalten, um den jeweiligen anderen Pol mit der inneren Hälfte (24) in Kontakt zu bringen unter Ausbildung des ersten Magnetkreises, so daß die Anordnung an dem magnetisierbaren Gegenstand (14) magnetisch befestigt werden kann, und um den anderen Pol in Kontakt mit dem magnetisch weniger leitfähigen Werkstoff (26) zu bringen unter Ausbildung des zweiten Magnetkreises, so daß der Gegenstand (14) von der Anordnung gelöst werden kann, bzw. umgekehrt.

17. Anordnung nach einem der Ansprüche 12—16, wobei der magnetisch weniger leitfähige Werkstoff (19, 26) ein halbmagnetisches Element ist, das aus einem magnetischen Nichtleiter besteht, in dem ein magnetischer Leiter verteilt ist.

18. Anordnung nach einem der Ansprüche 12—17, wobei in dem zweiten ferromagnetischen Element (31) eine Mehrzahl solcher ununterbrochener Endlosnuten (Fig. 9: 35, 36, 37) ausgebildet ist.

19. Anordnung nach Anspruch 1, 2 oder 3, wobei jeder Permanentmagnet (2; Fig. 11: 2a, 2b, 2c) in dem Tragorgan von einem magnetisch weniger leitfähigen Werkstoff (3; Fig. 11 und 12: 3a, 3b, 3c; Fig. 13: in 54a, 54b, 54c; Fig. 14: in 55a, 55b, 55c; Fig. 15: 86; Fig. 18: 103; Fig. 24: 203; Fig. 26: 204) flankiert ist.

20. Anordnung nach Anspruch 19, wobei das magnetisch weniger leitfähige Element (Fig. 11: 3a, 3b, 3c) in einem ersten ferromagnetischen Element (53a, 53b, 53c; Fig. 12 und 13: 51′, 51″) gehalten ist, das die ersten magnetpfadbildenden Mittel darstellt und zum Kontakt mit dem magnetisierbaren Gegenstand (14) ausgelegt ist, wobei ein Pol jedes der Mehrzahl Permanentmagnete (2a, 2b, 2c) zum Kontakt mit dem magnetisierbaren Gegenstand ausgelegt ist, ferner umfassend ein zweites ferromagnetisches Element (52), das dem ersten ferromagnetischen Element so zugeordnet ist, daß es relativ dazu gleitverschiebbar ist, um gleichzeitig den anderen Pol jedes der Permanentmagnete und das erste ferromagnetische Element zu kontaktieren unter Bildung des ersten Magnetkreises mit dem magnetisierbaren Gegenstand, so daß die Anordnung (50; 50'; 50") an dem Gegenstand (14) magnetisch festlegbar und von dem anderen Pol lösbar ist, wodurch der Gegenstand von der Anordnung lösbar ist bzw. umgekehrt, während der zweite Magnetkreis durch den magnetisch weniger leitfähigen Werkstoff (3a, 3b, 3c) gebildet wird.

21. Anordnung nach Anspruch 20, wobei das erste ferromagnetische Element in einer nichtmagnetischen Scheibe (Fig. 10—12: 51) gehalten ist, die das Tragorgan bildet und zum engen Kontakt mit der Oberfläche des magnetisierbaren Gegenstands (14) ausgelegt ist, und daß zweite ferromagnetische Element eine ferromagnetische Scheibe (52) umfaßt, die koaxial zu der nichtmagnetischen Scheibe (51) so angeordnet ist, daß sie um eine gemeinsame Achse drehbar ist, während ein Gleitkontakt zwischen beiden unterhalten wird, wobei die ferromagnetische Scheibe (52) Öffnungen (52a, 52b, 52c) aufweist, die symmetrisch um die Achse angeordnet sind und deren Anzahl derjenigen der Permanentmagnete (2a, 2b, 2c) entspricht, so daß, wenn jede Öffnung (52a, 52b, 52c) dem jeweils anderen Pol des entsprechenden Permanentmagnets benachbart positioniert ist, die Anordnung im wesentlichen von dem magnetisierbaren Gegenstand magnetisch gelöst ist, während der zweite Magnetkreis durch den magnetisch weniger leitfähigen Werkstoff gebildet wird, und daß, wenn die Öffnungen von den anderen Polen der Permanentmagnete fern angeordnet sind, der erste Magnetkreis für jeden Permanentmagnet gebildet ist, um die Anordnung magnetisch an dem Gegenstand festzulegen.

22. Anordnung nach Anspruch 20, wobei das erste ferromagnetische Element eine erste ferromagnetische Scheibe (Fig. 13 und 14: 51', 51") ist, die die ersten magnetpfadbildenden Mittel darstellt und zum engen Kontakt mit der Oberfläche des magnetisierbaren Gegenstands (14) ausgelegt ist, und das zweite ferromagnetische Element eine zweite ferromagnetische Scheibe (52) ist, die koaxial zu der ersten ferromagnetischen Scheibe (51', 51") so angeordnet ist, daß sie um eine gemeinsame Achse drehbar ist, während sie Gleitkontakt zwischen beiden unterhält, wobei die zweite ferromagnetische Scheibe (52) Öffnungen (52a, 52b, 52c) aufweist, die symmetrisch um die Achse angeordnet sind und deren Anzahl derjenigen der Permanentmagnete (2a, 2b, 2c) entspricht, so daß, wenn jede Öffnung angrenzend an den jeweils anderen Pol des entsprechenden Permanentmagnets positioniert ist, die Anordnung von dem magnetisierbaren Gegenstand im wesentlichen magnetisch gelöst ist, während der zweite Magnetkreis durch den magnetisch weniger leitfähigen Werkstoff gebildet wird, und daß, wenn die Öffnungen von den anderen Polen der Permanentmagnete fern positioniert sind, der erste Magnetkreis für jeden Permanentmagnet gebildet wird, so daß die Anordnung magnetisch an dem Gegenstand festgelegt ist.

23. Anordnung nach einem der Ansprüche 19—22, wobei der magnetisch weniger leitfähige Werkstoff (3; 3a—c; 54a—c; 55a—c; 86; 103; 204) ein halbmagnetisches Element umfaßt, das aus einem magnetischen Nichtleiter besteht, in dem ein magnetischer Leiter verteilt ist.

24. Anordnung nach einem der Ansprüche 1—4, umfassend eine Mehrzahl von abwechselnd aufeinanderfolgenden Schichten aus magnetischem und nichtmagnetischem Werkstoff (Fig. 15: 81, 82, 83; 84, 85), wobei die Schichten aus nichtmagnetischem Werkstoff (84, 85) das Tragorgan bilden und die Permanentmagnete (2) enthalten, wobei jeder Permanentmagnet von einem magnetisch weniger leitfähigen Werkstoff (86) flankiert ist, der die zweiten magnetpfadbildenden Mittel darstellt.

25. Anordnung nach Anspruch 24, wobei wenigstens die mit dem Gegenstand in Kontakt zu bringende Fläche der Anordnung eine Schicht (Fig. 15: 87) aus sehr hartem Werkstoff wie Titan oder Titannitrid oder einen Titanüberzug aufweist.

26. Anordnung nach einem der Ansprüche 1—3, wobei das Tragorgan eine lange Matrix (Fig. 18 und 20: 101; Fig. 24—27: 201) aus verformbarem Werkstoff, der gegen ein hohes Maß an Verformung ohne Rißbildung beständig ist, z.B. Gummi ist.

27. Anordnung nach Anspruch 26, wobei wenigstens eine Seite jedes Permanentmagnets (2) mit einem Magnet- oder Halbmagnetwerkstoff (Fig. 18, 20 und 21: 103; Fig. 19: 102; Fig. 24—27: 204) beschichtet ist.

28. Anordnung nach einem der Ansprüche 1—3, wobei das Tragorgan aus einer Matrix aus verformbarem Werkstoff (Fig. 24—27: 201) mit hohem Verformungsgrad besteht, in der eine Mehrzahl Untermatrizen (203) aus einem verformbaren Werkstoff mit relativ niedrigerem Verformungsgrad regelmäßig verteilt sind, wobei in jeder Untermatrix eine Mehrzahl Permanentmagnete (2) regelmäßig angeordnet ist.

29. Anordnung nach Anspruch 28, wobei jeder Permanentmagnet (2) in einem verformbaren halbmagnetischen Werkstoff (Fig. 26: 204) eingeschlossen oder zwischen Platten aus verformbarem halbmagnetischem Werkstoff (Fig. 27: 204) sandwichartig eingeschlossen ist.

**Revendications**

1. Ensemble de retenue magnétique (1) destiné à saisir et à libérer sélectivement un objet aimantable (14), comprenant plusieurs aimants permanents en forme de colonnes ou de disques (2) de même forme et de mêmes dimensions, dont chacun est aimanté axialement et présente deux pôles magnétiques opposés sur ses deux faces d'extrémité opposées, les aimants (2) étant disposés respectivement dans des positions prédéterminées à intervalles réguliers les uns des autres et constituant une batterie prédéterminée dans cet ensemble (1) de manière à produire individuellement des flux magnétiques d'intensité uniforme, des moyens de support (5) dans lesquels chacun des aimants permanents (2) est individuellement encastré, au moins latéralement, pour maintenir ces aimants (2) dans lesdites positions espacées, pratiquement en rapport mutuel d'isolation magnétique, des premiers moyens formant trajet magnétique (7, 12) associés aux moyens de support (5) pour relier magnétiquement et individuellement les pôles opposés de chacun des aimants permanents (2) avec interposition dudit objet aimantable (4) par un premier circuit magnétique (12, 14, 7, 5) dont la réluctance magnétique est suffisamment basse pour que l'ensemble (1) puisse se fixer à l'objet (14) ou vice versa, et des seconds moyens formant trajet magnétique (13) associés aux moyens de support (5) pour établir, pour chacun des aimants permanents (2) et parallèlement au premier circuit magnétique, un second circuit magnétique (13, 14, 7, 5) de réluctance magnétique relativement élevée pour shunter le premier circuit magnétique lorsque l'objet (14) doit être ou reste détaché de l'ensemble, ces seconds moyens formant trajet magnétique (13) contenant une matière semimagnétique et la réluctance magnétique élevée étant telle qu'elle permette de détacher facilement un objet de l'ensemble, mais qu'elle empêche une désaimantation importante de l'aimant associé, aboutissant à la séparation des objets d'avec l'ensemble.

2. Ensemble selon la revendication 1, dans lequel les aimants permanents (2) ont leurs axes d'aimantation sensiblement parallèle les uns aux autres.

3. Ensemble selon la revendication 2, dans lequel les axes d'aimantation sont orientés de manière à être sensiblement perpendiculaires à la surface de l'ensemble (1) destinée à venir en contact avec l'objet (14).

4. Ensemble selon l'une quelconque des revendications 1 à 3, dans lequel chacun des aimants permanents (2) est flanqué, dans les moyens de support (5), d'un élément amagnétique (3) respectif pour le maintenir latéralement de façon magnétiquement isolée des autres aimants permanents (2).

5. Ensemble selon la revendication 4, dans lequel l'élément amagnétique (3) est retenu dans un premier élément ferromagnétique (5) faisant partie des premiers moyens formant trajet magnétique et disposé de manière à être fermement en contact avec l'un des pôles de chaque aimant permanent (2), dont l'autre pôle est ajusté en contact avec un second élément ferromagnétique (12) faisant partie des premiers moyens formant trajet magnétique et agencé de manière à être en contact avec l'objet aimantable (14) le long d'une surface (15) de celui-ci, établissant de la sorte le premier circuit magnétique.

6. Ensemble selon la revendication 5, dans lequel le second élément ferromagnétique (12) comprend plusieurs pièces façonnées en forme de colonne (12) qui établissent chacune un pont entre ledit autre pôle et l'objet aimantable (14) pour former le premier circuit magnétique, chacune de ces pièces façonnées en forme de colonne (12) étant retenue dans un élément (13) respectif qui est moins conducteur magnétiquement que le premier et le second éléments ferromagnétiques (5, 12) pour constituer les seconds moyens formant trajet magnétique et qui est agencé de manière à séparer chaque pièce façonnée (12) du reste (7) du second élément ferromagnétique, tout en établissant le second circuit magnétique.

7. Ensemble selon la revendication 6, dans lequel l'élément moins conducteur magnétiquement (13) est constitué par un élément semimagnétique composé d'une matière magnétiquement non conductrice dans laquelle est distribuée une matière magnétiquement conductrice.

8. Ensemble selon la revendication 6 ou 7, dans lequel le premier élément ferromagnétique (5) est disposé de manière à être en contact glissant avec le second élément ferromagnétique (12) de manière à pouvoir être déplacé par glissement par rapport à celui-ci, l'ensemble comprenant en outre des moyens (8) pour déplacer le premier élément ferromagnétique (5) par rapport au second élément ferromagnétique (12) afin d'amener ledit autre pôle en contact avec l'élément moins conducteur magnétiquement (13) et permettre ainsi à l'objet aimantable (14) d'être libéré de l'ensemble ou vice versa, tout en établissant le second circuit magnétique.

9. Ensemble selon la revendication 8, dans lequel le premier élément ferromagnétique (5) a une forme rectangulaire et est retenu dans un logement rectangulaire (6) formé dans le second élément ferromagnétique (7) de manière à pouvoir être déplacé par glissement dans celui-ci, et les moyens de déplacement comprennent une manette (8) qui passe à travers le second élément ferromagnétique (7) et dont une extrémité est fixée au premier élément ferromagnétique (5), tandis que son autre extrémité est située à l'extérieur du logement (6).

10. Ensemble selon l'une quelconque des revendications 6 à 9, dans lequel chacune des pièces ferromagnétiques façonnées en forme de colonne (12) est conique de manière à diverger en direction de l'objet aimantable (14).

11. Ensemble selon la revendication 10, comprenant en outre une bague de calage (fig. 4: 16) destinée à recevoir à travers elle, par emboîtement à force, la pièce ferromagnétique façonnée en forme de colonne (12) à l'intérieur de l'élément moins conducteur magnétiquement (13).

12. Ensemble selon la revendication 5, dans lequel le second élément ferromagnétique (fig. 1 à 4: 7; fig. 6 à 8: 21; fig. 9: 31) comprend une première et une seconde parties séparées par une rainure continue en boucle fermée (18; 23; 35, 36, 37) remplie d'une matière moins conductrice magnétiquement (19, 26) faisant partie des seconds moyens formant trajet magnétique, et les aimants permanents (2) sont disposés au contact de la première partie (12; 24; 32, 33, 34) du côté interne de la rainure en boucle fermée.

13. Ensemble selon la revendication 12, dans lequel le premier élément ferromagnétique (5, 22) est disposé de manière à être en contact glissant avec le second élément ferromagnétique (7, 21, 31) pour pouvoir être déplacé par glissement par rapport à celui-ci, et l'ensemble comprend en outre des moyens (8) pour déplacer le premier élément ferromagnétique par rapport au second élément ferromagnétique afin d'amener chacun desdits autres pôles en contact avec l'élément moins conducteur magnétiquement (19, 26) qui remplit la rainure (18; 23; 35, 36, 37), permettant ainsi que l'objet aimantable (14) soit libéré de l'ensemble ou vice versa, tout en établissant le second circuit magnétique.

14. Ensemble selon la revendication 13, dans lequel le premier élément ferromagnétique (5) a une forme rectangulaire et est retenu dans un logement rectangulaire (6) formé dans le second élément ferromagnétique (7) de manière à pouvoir être déplacé par glissement dans celui-ci, et les moyens de déplacement comprennent une manette (fig. 5: 8) qui passe à travers le second élément ferromagnétique et dont l'une des extrémités est fixée au premier élément ferromagnétique, tandis que son autre extrémité est située à l'extérieur du logement.

15. Ensemble selon l'une quelconque des revendications 12 à 14, dans lequel la rainure continue en boucle fermée (23; 35, 36, 37) présente plusieurs lobes (24a; 32a, 33a, 34a) délimités par la périphérie de la partie interne (24; 32, 33, 34) du second élément ferromagnétique, et les aumains permanents (2) sont disposés respectivement de manière à être contigus aux régions de ces lobes.

16. Ensemble selon la revendication 15, dans lequel le premier et le second éléments ferromagnétiques (fig. 6 à 8: 22, 21) sont réalisés sous la forme de disques disposés de manière à être sensiblement coaxiaux l'un par rapport à l'autre et à pouvoir tourner l'un par rapport à l'autre autour d'un axe commun tout en conservant un contact mutuel à glissement pour placer ledit autre pôle en contact avec ladite partie interne (24) et établir ainsi le premier circuit magnétique, ce qui permet à l'ensemble d'être fixé magnétiquement à l'objet aimantable (14), et pour placer ledit autre pôle en contact avec la matière moins conductrice magnétiquement et établir ainsi le second circuit magnétique, ce qui permet à l'objet (14) d'être libéré de l'ensemble ou vice versa.

17. Ensemble selon l'une quelconque des revendications 12 à 16, dans lequel la matière moins conductrice magnétiquement (19, 26) est un élément semimagnétique composé d'une matière magnétiquement non conductrice dans laquelle est distribuée une matière magnétiquement conductrice.

18. Ensemble selon l'une quelconque des revendications 1 à 3, dans lequel chacun des aimants permanents (2; fig. 11: 2a, 2b, 2c) est flanqué, dans ledit support, d'une matière moins conductrice magnétiquement (3; fig. 11 et 12: 3a, 3b, 3c; fig. 13: 54a, 54b, 54c; fig. 14: 55a, 55b, 55c; fig. 15: 86; fig. 18: 103; fig. 24: 203; fig. 26: 204).

20. Ensemble selon la revendication 19, dans lequel l'élément moins conducteur magnétiquement (fig. 11: 3a, 3b, 3c) est retenu dans un premier élément ferromagnétique (53a, 53b, 53c; fig. 12 et 13: 51', 51") faisant partie des premiers moyens formant trajet magnétique et destiné à venir en contact avec l'objet aimantable (14), l'un des pôles de chacun des aimants permanents (2a, 2b, 2c) est agencé de manière à venir en contact avec cet objet aimantable, et l'ensemble comprend en outre un second élément ferromagnétique (52) associé au premier élément ferromagnétique de manière à pouvoir être déplacé en glissant par rapport à celui-ci, afin de venir simultanément en contact avec l'autre pôle de chacun des aimants permanents et avec le premier élément ferromagnétique pour établir le premier circuit magnétique avec l'objet aimantable, en assurant ainsi la fixation magnétique de l'ensemble (50; 50'; 50") à l'objet (14), et afin d'être séparé dudit autre pôle, en permettant ainsi à l'objet d'être libéré de l'ensemble ou vice versa, tout en établissant le second circuit magnétique passant par la matière moins conductrice magnétiquement (3a, 3b, 3c).

21. Ensemble selon la revendication 20, dans lequel le premier élément ferromagnétique est retenu dans un disque amagnétique (fig. 10 à 12: 51) constituant lesdits moyens de support et agencé de manière à établir un contact intime avec ladite surface de l'objet aimantable (14), et le second élément ferromagnétique comprend un disque ferromagnétique (52) disposé coaxialement avec le disque amagnétique (51) de manière à pouvoir tourner autour d'un axe commun tout en maintenant entre eux un contact glissant, le disque ferromagnétique (52) étant pourvu d'ouvertures (52a, 52b, 52c) disposées symétriquement autour dudit axe et correspondant en nombre à celui des aimants permanents (2a, 2b, 2c), si bien que lorsque chacune des ouvertures (52a, 52b, 52c) est en position contiguë dudit autre pôle de l'aimant permanent correspondant, l'ensemble est pratiquement libéré magnétiquement de l'objet aimantable, tandis que le second magnétique est établi à travers la matière moins conductrice magnétiquement et que lorsque les ouvertures sont à distance desdits autres pôles des aimants permanents, le premier circuit magnétique est établi pour chacun des aimants permanents afin de fixer magnétiquement l'ensemble à l'objet.

22. Ensemble selon la revendication 20, dans lequel le premier élément ferromagnétique comprend un premier disque ferromagnétique (fig. 13 et 14: 51', 51") faisant partie des premiers moyens formant trajet magnétique et agencé de manière à établir un contact intime avec la surface de l'objet aimantable (14), et le second élément ferromagnétique comprend un second disque ferromagnétique (52) disposé coaxialement avec le premier disque ferromagnétique (51', 51") de manière à pourvoir tourner autour d'un axe commun tout en maintenant entre eux un contact glissant, le second disque ferromagnétique (52) étant pourvu d'ouvertures (52a, 52b, 52c) disposées symétriquement autour dudit axe et correspondant en nombre à celui des aimants permanents (2a, 2b, 2c), si bien que lorsque chacune des ouvertures est en position contiguë audit autre pôle de l'aimant permanent correspondant, l'ensemble est pratiquement libéré magnétiquement de l'objet aimantable, tandis que le circuit magnétique à travers la matière moins conductrice magnétiquement est établi et que lorsque les ouvertures sont à distance desdits autres pôles des aimants permanents, le premier circuit magnétique est établi pour chacun des aimants permanents, afin de fixer magnétiquement l'ensemble à l'objet.

23. Ensemble selon l'une quelconque des revendications 19 à 22, dans lequel la matière moins conductrice magnétiquement (3; 3a—c; 54a—c; 86; 103; 204) comprend un élément semimagnétique composé d'une matière magnétiquement non conductrice dans laquelle est distributée une matière magnétiquement conductrice.

24. Ensemble selon l'une quelconque des revendications 1 à 4, comprenant plusieurs couches alternées de matière magnétique et amagnétique (fig. 15: 81, 82, 83; 84, 85), les couches de matière amagnétique (84, 85) constituant lesdits moyens de support et contenant les aimants permanents (2), chacun de ces aimants permanents étant flanqué d'une matière moins conductrice magnétiquement (86) constituant lesdits seconds moyens formant trajet magnétique.

25. Ensemble selon la revendication 24, dans lequel au moins la face de l'ensemble qui doit être en contact avec l'objet est garnie d'une couche (fig. 15: 87) d'une matière très dure telle que le titane ou le nitrure de titane, ou d'un revêtement de titane.

26. Ensemble selon l'une quelconque des revendications 1 à 3, dans lequel les moyens de support sont constitués par une matrice de forme allongée (fig. 18 et 20: 101; fig. 24 à 27: 201) en une matière déformable capable de supporter un degré élevé de déformation sans formation de fissures, telle qu'un caoutchouc.

27. Ensemble selon la revendication 26, dans lequel chacun des aimants permanents (2) est recouvert, sur l'une de ses faces au moins, d'une matière magnétique ou semimagnétique (fig. 18, 20 et 21: 103; fig. 24 à 27: 204).

28. Ensemble selon l'une quelconque des revendications 1 à 3, dans lequel les moyens de support sont constitués par une matrice en une matière déformable (fig. 24 à 27: 201) présentant un degré élevé de déformabilité, dans laquelle sont distribuées régulièrement plusieurs sous-matrices (203) faites d'une matière déformable ayant une déformabilité relativement faible, chaque sous-matrice contenant plusieurs aimants permanents (2) qui y sont disposés régulièrement.

29. Esemble selon la revendication 28, dans lequel chaque aimant permanent (2) est enfermé dans une matière semimagnétique déformable (fig. 26: 204) ou pris en sandwich entre des plaques de matière semimagnétique déformable (fig. 27: 204).

FIG. 1
1
7
6
13
12
2
5
II
II
13
12
2
6

FIG. 2
14
15
7
13
12
7
13
12
7
13
12
11
7
1
10
6
N
S
S
N
N
S
8
5
3
2
4
4
3
2
9
4
5
2
3
5

FIG. 3
15
14
7
13
12
7
13
12
7
13
12
7
1
8
N
S
S
N
N
S
6
5
3
2
4
4
3
9
4
2
3
5

FIG.4

15
13'
12
13'
16
16
11
7
9
5
N
S
3
2
3
10

FIG.7

15
26
24a
26
23
25
21
20
22a
N
S
4
3
2
9
22

FIG.8

20'
15
26
24a
26
25
21
N
S
3
2
22

FIG. 5

17
19
12
18
2
7
5
8

FIG. 6

20
23
2
26
24
25
22
21
2
24a
24a
VII
26
2
24a
21
VII

FIG. 9

30
31
32
35
33a
33
36
32a
33a
32a
34a
34a
34
37

FIG.10
41
44
42
40
43
50
52c
52
52a
51
52b
14

FIG.11
(a)
50
52c
2c
3c
52
51
53c
53a
44
53b
3a
3b
52b
2a
2b
52a
A
A
(b)
2c
53c
52
52c
51
44
52b
53a
53b
2a
B
B
52a
2b

FIG.12

(a)
(b)
50
52a
44
52b
14
52
51
N
S
53a 2a 53a 53b 2a 53b
3a 3a 3b 3b
53a 2a 53a 53b 2b 53b

FIG.13

(a)
(b)
50'
52a
44
52b
14
52
51'
N
S
54a 2a 54a 54b 2b 54b

FIG.14

(a)
(b)
50"
52a
44
52b
14
52
51"
N
S
55a 2a 55a 55b 2b 55b

FIG.15

80
87
86 2 86 86
86 2 86 86
87
81
84
83
86
85
82
87
88
86
S
N
87 86 2 86 86
86 2 86 86
14

FIG.16

100
C
C
A
C
D
B
C

FIG.17
100
2
102
R
101
R
102
2
102
102
FIG.18
100
103
101
103
R
R
2
2
FIG.19
100
102
101
102
R
2
R
2
FIG.20
(a)
100
(b)
2
103
2
103
2
103
B
2
103
101
103
R
101
2
100
R
2
2
103
2
103
2
103
B
2
103
103

FIG. 21

100
103
2
R
N
S

FIG. 22

A
C
XXIII
B
200

FIG. 23

B
A
B
B
B
B
C
200

FIG. 24

200
201
R
2
203
XXV
XXV

FIG. 25

200
2
203
201

FIG.26
R
204
2
203
N-S
S-N
N-S
S-N
N-S
S-N
XXVII
XXVII

FIG.27
204
2
203
204
2
N-S
S-N
204
R
204
R